# EUROPEAN PATENT APPLICATION

(11) **EP 4 023 305 A1**
(43) Date of publication of application: **06.07.2022**
(21) Application number: 20856444.3
(22) Date of filing: 27.07.2020
(51) Int. Cl.: A62B 18/02, A62B 23/02, A41D 13/11, H04M 1/11

(54) **WALLET-TYPE SMARTPHONE CASE**

(30) Priority: 31.08.2019 JP 2019159171; 05.05.2020 JP 2020081640
(71) Applicant: Earth Support LLC, Takatsuki-shi, Osaka, 569-1118 (JP)
(72) Inventor: MATSUDA Masamichi, Osaka-shi, Osaka 532-0003 (JP)
(74) Representative: Spengler, Robert
(86) International application number: PCT/JP2020/028630
(87) International publication number: WO 2021/039227

(57) **Abstract**

The object is in the event of a fire, you can use something close to you to prevent poisonous gas.
a wallet-type smartphone case has face-apply part which can cover at least nose and mouth of a face, thereby to have such function of a smoke proof mask or gas mask and the face-apply part has a surrounding member 2, at least a part of the surrounding member 2 is attached to the periphery of the body, the surrounding member 2 can select a standing state and a lying down state, and the surrounding member 2 takes the lying down state when used as a smartphone case, and takes the standing state when used as the smoke proof mask or gas mask.

## Description

### TECHNICAL FIELD

This invention is concerning the wallet-type smartphone case, which has function of smoke proof and toxic prevention mask.

### BACKGROUND OF ART

Traditionally, when a fire causes casualties, many people die by inhaling toxic gas such as carbon monoxide or smoke. Therefore, a toxic gas mask is known as a countermeasure against such a fire (see Patent Document 1).

### prior art documents

### patent document

patent document 1
patent laid-open no.2009-153726 gazette

### SUMMARY OF THE INVENTION

### PROBLEM TO BE SOLVED BY THE INVENTION

However, the place where such a toxic gas mask is placed is limited, such as in the workplace, and it was difficult to use it in case of emergency.

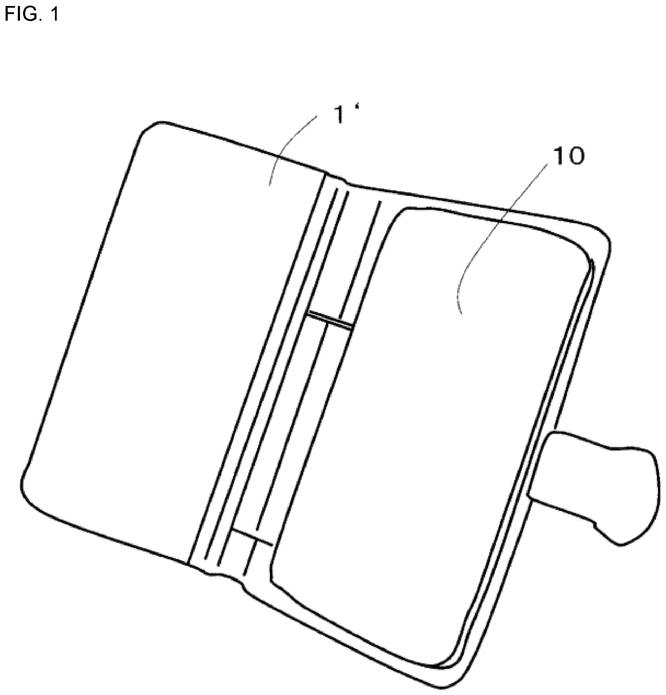

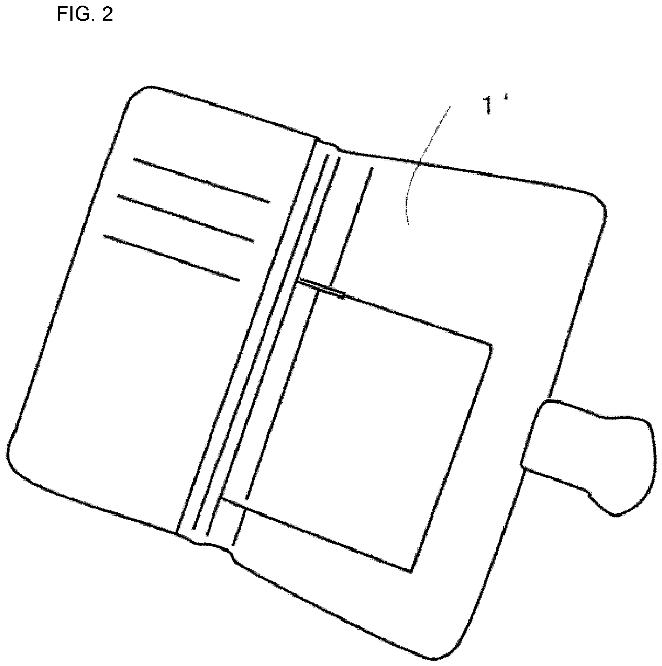

Therefore, the inventor paid attention to the fact that many people always keep their smartphones close to them so that their smartphones can be used immediately, and the inventor found that in the event of a fire, the wallet-type smartphone cases shown in FIGs. 1 and 2 are possible to be used as smoke-proof and gas masks. Here, 10 is a smartphone and 1' is a wallet-type smartphone case.

Considering the prior art problem, the present invention has such object to provide such a wallet-type smartphone case, which has function of smoke-proof and toxic prevention mask.

### SOLUTION MEANS OF THE PROBLEM

The first invention is
a wallet-type smartphone case comprising a body having such casing function for a smartphone, which can be folded right and left or up and down, wherein
a face-apply part is constituted by at least a nearly entire of the body,
by pressing the body of the wallet-type smartphone case against a face with it open, the face-apply part can cover at least nose and mouth of the face, thereby to have such function of a smoke proof mask or gas mask.

The second invention is
the wallet-type smartphone case according to the first invention, wherein
the face-apply part has a surrounding member,
   at least a part of the surrounding member is attached to the body,
   the surrounding member can select a standing state and a lying down state, and
   the surrounding member takes the lying down state when used as a smartphone case, and takes the standing state when used as the smoke proof mask or gas mask.

The third invention is
the wallet-type smartphone case according to the second invention, wherein
the surrounding member is folded inside of the body at the lying down state.

The fourth invention is
the wallet-type smartphone case according to the first (mistyped-second is correct) invention, wherein
there is provided an air-take-in part on a part of the body or a part of the surrounding member.

The fifth invention is
the wallet-type smartphone case according to the fourth invention, wherein
an inhalation pipe is attached to the air-take-in part with communicating, and
when using, outside air is took in only through the inhalation pipe.

The sixth invention is
the wallet-type smartphone case according to the fourth invention, wherein
the air-take-in part has a filter layer or filter member which can filter smoke or poisonous gas.

The seventh invention is
the wallet-type smartphone case according to the sixth invention, wherein
the filter layer or filter member of the air-take-in part is sealed by using a sealing member which is composed of metal plate or frame or foil.

The eighth invention is
the wallet-type smartphone case according to the seventh invention, wherein
there is provided oxygen generator in the sealing member.

### ADVANTAGEOUS EFFECTS OF THE INVENTION

According to the first invention, the wallet-type smartphone case which is familiar, can be easily utilized as a smoke proof mask or gas mask.

According to the second invention, the wallet-type smartphone case can be utilized usually as a smartphone case by lying down the surrounding member, and can be utilized as a smoke proof mask or gas mask by standing the surrounding member when a fire occurs.

According to the third invention, because the surrounding member is folded, the surrounding member does not get in the way when it is used as a smartphone case.

According to the fourth invention, by the air-take-in part, the smoke proof mask or gas mask can work for a long time.

According to the fifth invention, clean air can be taken in by the Inhalation pipe.

According to the sixth invention, clean air can be taken in by the filtering.

According to the seventh invention, the function of the smoke proof mask or gas mask can be maintained for a long time because of the sealing member.

According to the eighth invention, oxygen can be supplied by the oxygen generator and the function of it can be maintained for a long time.

### BRIEF DESCRIPTION OF DRAWINGS

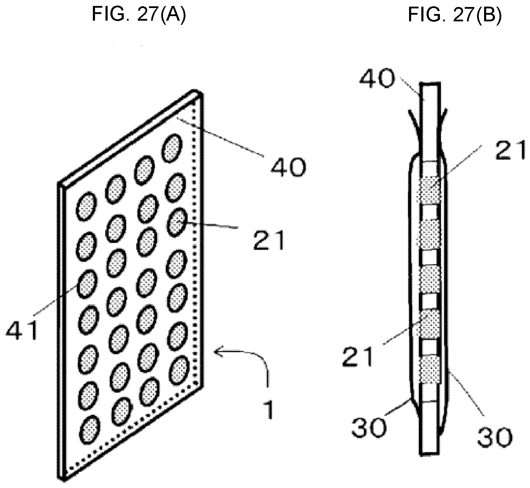

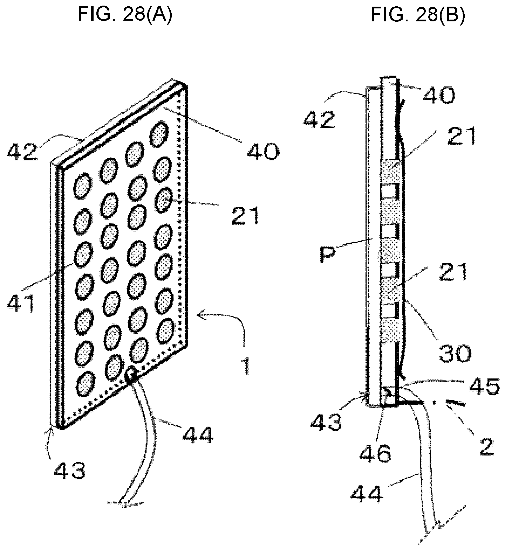

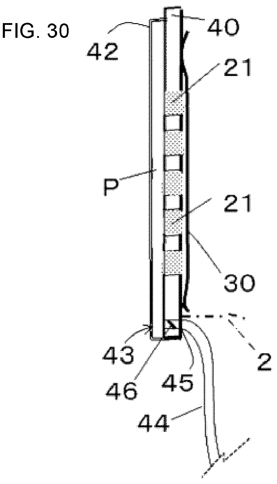

[FIG.1]
   a perspective view of a prior wallet-type smartphone case in which a smartphone is set.
[FIG.2]
   a perspective view of the perspective view of FIG.1 from which the smartphone is removed.
[FIG.3]
   a perspective view of the wallet-type smartphone case according to an embodiment of the present invention.
[FIG.4]
   a perspective view of the embodiment where the surrounding member is stood.
[FIG.5]
   an abbreviated sectional view showing the filter layer and so on in the said embodiment.
[FIG.6] (A),(B)
   a perspective view showing how the surrounding member is folded.
[FIG.7] (A),(B)
   a view showing how to use the wallet-type smartphone case of the embodiment.
[FIG.8]
   a front view showing a relation of the surrounding member of the smartphone case of the embodiment, with a face.
[FIG.9]
   a view showing example 1 about assemble process of the air-take-in part
   of the embodiment.
[FIG.10]
   a view showing example 1 about assemble process of the air-take-in part
   of the embodiment.
[FIG.11]
   a view showing example 1 about assemble process of the air-take-in part
   of the embodiment.
[FIG.12]
   a view showing example 1 about assemble process of the air-take-in part
   of the embodiment.
[FIG.13]
   a view showing example 1 about assemble process of the air-take-in part
   of the embodiment.
[FIG.14]
   a view showing example 1 about assemble process of the air-take-in part
   of the embodiment.
[FIG.15]
   a view showing example 2 about assemble process of the air-take-in part
   of the embodiment.
[FIG.16]
   a view showing example 2 about assemble process of the air-take-in part
   of the embodiment.
[FIG.17]
   a view showing example 2 about assemble process of the air-take-in part
   of the embodiment.
[FIG.18]
   a view showing example 2 about assemble process of the air-take-in part
   of the embodiment.
[FIG.19]
   a view showing example 2 about assemble process of the air-take-in part
   of the embodiment.
[FIG.20]
   a view showing a modification of the example 2 about assemble process of the air-take-in part of the embodiment.
[FIG.21]
   a view showing a modification of the example 2 about assemble process of the air-take-in part of the embodiment.
[FIG.22]
   a view showing a modification of the example 2 about assemble process of the air-take-in part of the embodiment.
[FIG.23]
   a view showing a modification of the example 2 about assemble process of the air-take-in part of the embodiment.
[FIG.24]
   a view showing an example 3 about assemble process of the air-take-in part of the embodiment.
[FIG.25]
   a view showing an example 3 about assemble process of the air-take-in part of the embodiment.
[FIG.26]
   a view showing a modification of the example 3 about assemble process of the air-take-in part of the embodiment.
[FIG.27]
   a view showing an example 4 about assemble process of the air-take-in part of the embodiment.
[FIG.28]
   a view showing a modification of the FIG.27.
[FIG.29]
   a view showing a usual stored state of the Inhalation pipe 44 in the example of FIG.28.
[FIG.30]
   a view showing yet another modification of FIG.27.
[FIG.31]
   a view a usual stored state of the Inhalation pipe 44 in the example of FIG.30.

### EMBODIMENTS OF THE INVENTION

Hereinafter, embodiment of the wallet-type smartphone case of the present invention, is described referring to drawings.

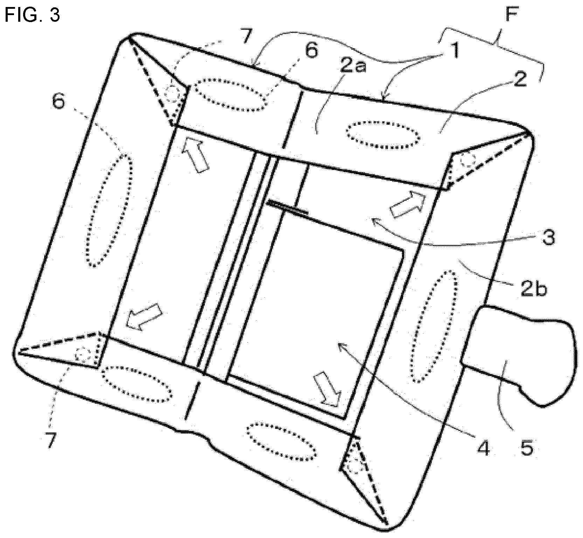

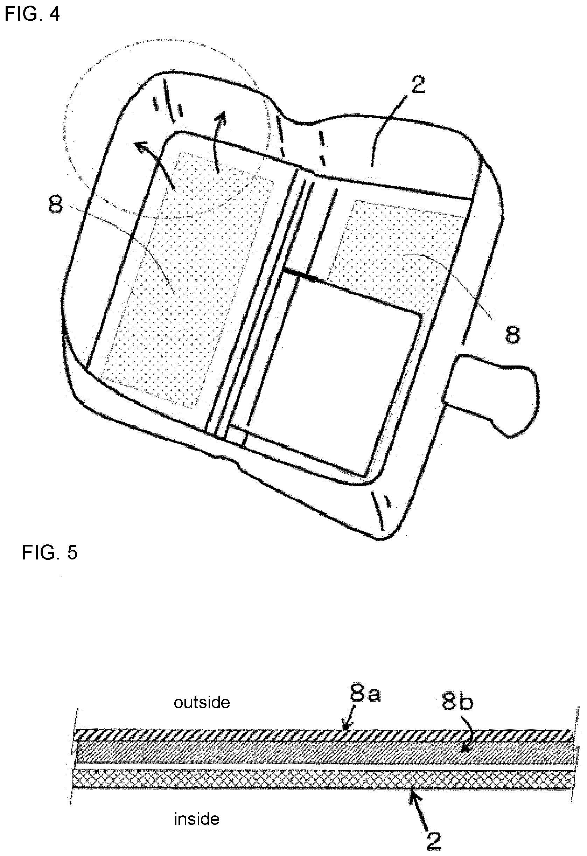

FIG.3 is a perspective view showing the wallet-type smartphone case the type of which is capable of being folded left and right, of the embodiment of the present invention, and FIG.4 is a perspective view showing a state where the surrounding member is stood.

In FIG.3, 1 is a body of the smartphone case, 2 is the folded surrounding member, 3 is main surface of the body 1 of the smartphone case, 4 is base piece which is used for installing a smartphone 10 to the body 1 of the smartphone case, 5 is a connecting piece for closing the wallet-type smartphone case, 6 is a hook-and-loop fastener for connecting the lying surrounding member 2 to the main surface 3 of the smartphone case, 7 is a hook-and-loop fastener for connecting the folded surrounding member to each other. By the way the surrounding member 2 is a part of the face-apply part of the present invention. That is the face-apply part F of the embodiment comprises nearly almost of the body 1 of the smartphone case and the surrounding member 2.

Here, the FIG.3 shows the lying state of the surrounding member 2 as folded. The surrounding member 2 has such surrounding member part 2a located up and down and surrounding member part 2b located right and left. The adjacent surrounding member parts 2a, 2b are folded as described below at their both edges, thereby to be close contacted on the main surface 3 of the body 1 of the smartphone case, and the close contacting is maintained by the hook-and-loop fastener 6 and further the surrounding member part 2a, 2b is also in close contact with each other by the hook-and loop fastener 7.

Further though omitted in FIG.3, as shown in FIG.4 an air-take-in part 8 is provided on the main surface 3 of the body 1 of the smartphone case. The air-take-in part 8 comprises mainly as shown FIG.5 a protective outer layer 8a and filter layer 8b from the outside.

The filter layer 8b is a layer having a function of filtering toxic gases such as carbon monoxide, soot, hydrogen chloride, and hydrogen sulfide. The protective outer layer 8a is a surface layer that protects the filter layer 8b, and has a large number of holes for taking in air. The surrounding member 2 is fully or partially contacted to the filter layer 8b in the lying down state as described above. The surrounding member 2 is usually made of a material that does not allow air to pass through, but it is also possible to allow air to pass through if it has the function of the filter layer.

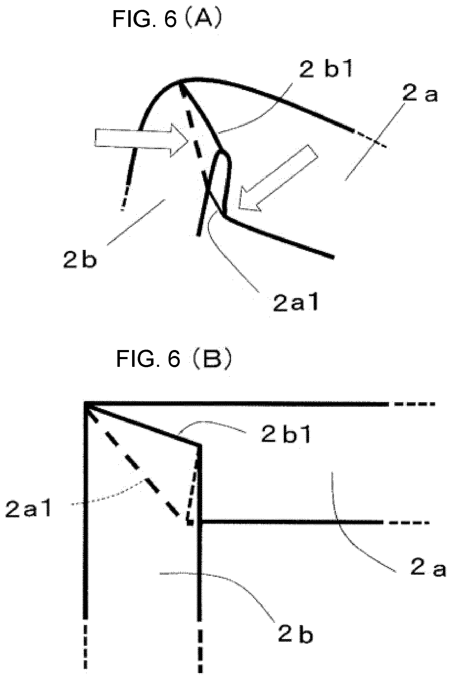

Next, how to fold the surrounding member 2 will be described. FIG. 6 shows an example of how to fold it, and FIG. 6(A) shows how to fold in such manner that the end 2a1 of the upper surrounding member 2a comes to the lower side and the end 2b1 of the left side surrounding member 2b comes to the upper side (see the hollow arrow). FIG. 6(B) shows the result. The folding method is not limited to this, and any folding method may be used.

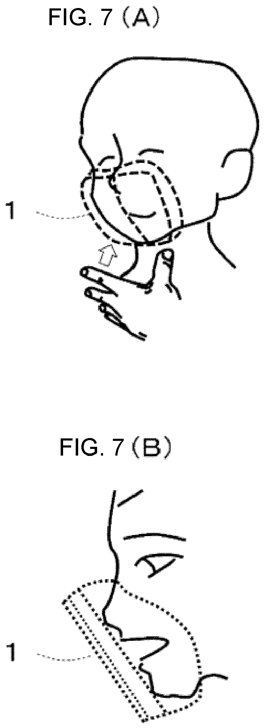

Next, a case where a fire occurs will be described. First, the main body 1 of the smartphone case is opened to the left and right, and then the smartphone 10 is removed. After that, with the surrounding member 2 lying down as shown in FIG. 3, the hook-and-loop fasteners 6 and 7 are peeled off by hooking the place indicated by the hollow arrow with a finger, and the surrounding member 2 is sufficiently erected as shown in FIG 4. As shown in FIG. 7, while keeping open the main body 1 of the wallet-type smartphone case with the surrounding member 2 being fully erected upright, up, down, left and right, the surrounding member 2 is pressed against a face with covering a nose and a mouth of the face, by holding a front side with a palm of your hand. FIG. 7 (A) is a perspective view showing the state, and FIG. 7 (B) is a schematic cross-sectional view showing the state.

By doing so, it is possible to breathe while filtering the toxic gas generated by the fire, which enables emergency evacuation.

Next, the embodiment will be described in more detail.

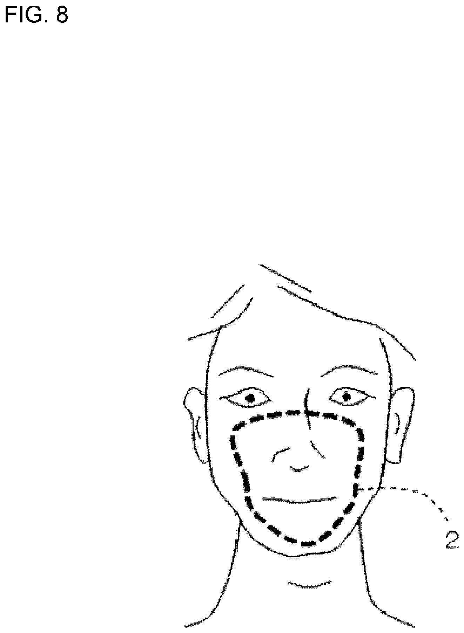

As shown in FIG. 8, it is desirable that the surrounding member 2 fits the face of men and women of all ages as much as possible. so it is desirable to first determine the shape of various surrounding members 2 corresponding to men and women of all ages and to attach it on the body 1 of the smartphone case and to fold it. For that purpose, it is not always necessary to erect the surrounding member 2 from the outer peripheral edge of the main body 1 of the smartphone case. By doing so, it is possible to eliminate the gap with the face. That is, the shape of the main body 1 of the smartphone case is usually rectangular, but the shape of the surrounding member 2 is not limited to the rectangular shape.

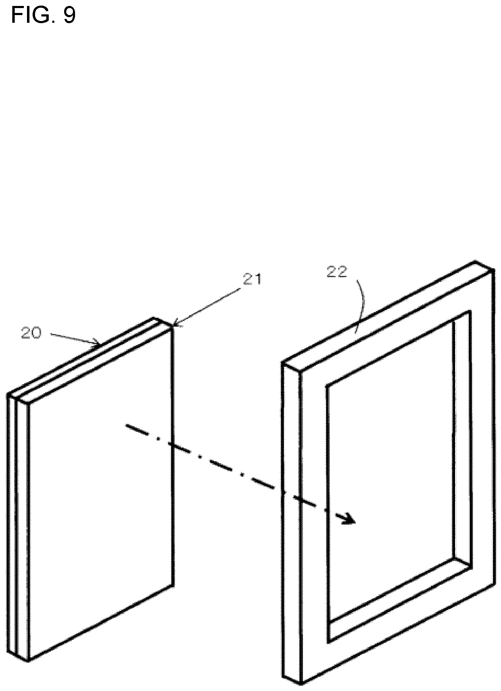

Figs. 9 to 26 show detailed specific examples of the air-take-in part 8.

### <Specific example 1>

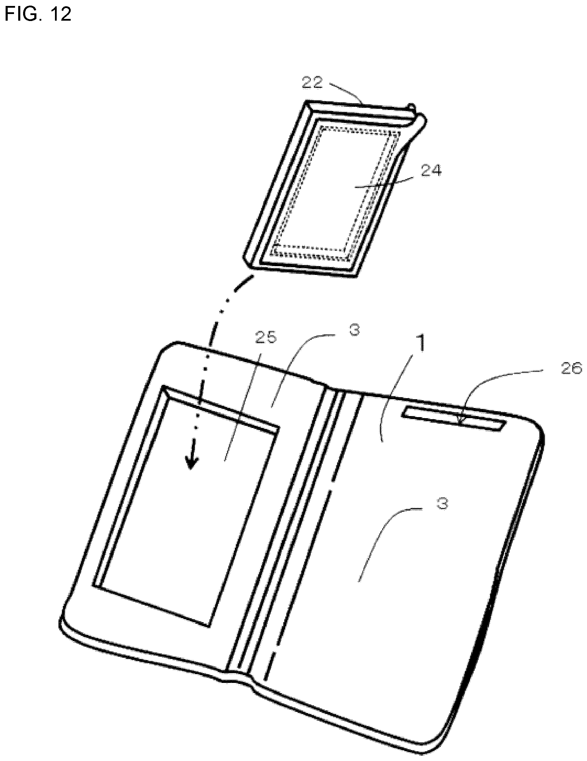

A window 25 is formed on the main surface 3 of the main body 1 of the smartphone case (see FIG. 12), and the members assembled as follows mentioned are fitted therein.

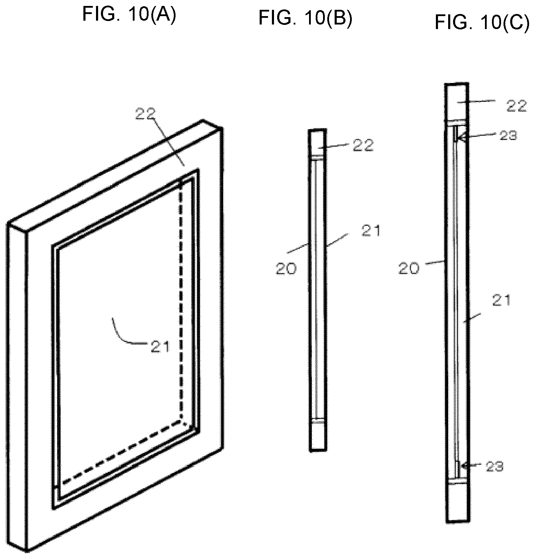

As shown in FIG. 9, a filter member 21 having at least a filter layer is attached to a stiff and rigid perforated plate 20. Fit it into the aluminum frame 22. FIG. 10 (A) is a perspective view of the fitted state, and FIG. 10 (B) is a cross-sectional side view thereof. FIG. 10(C) is an example in which the spacer 23 is interposed between the perforated plate 20 and the filter member 21 to prevent the filter member 21 and the perforated plate 20 from being in too close contact with each other as to degrade the filter function.

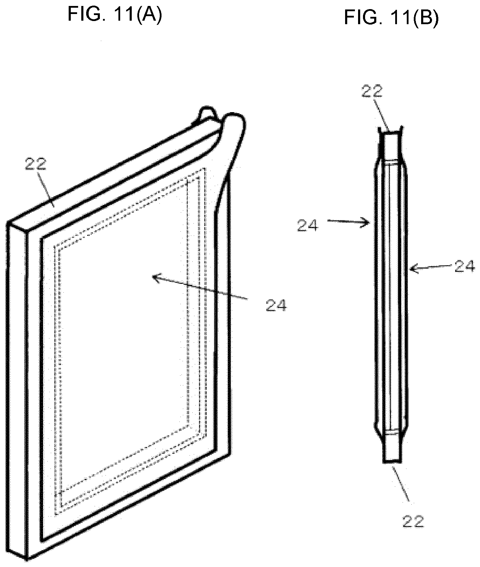

FIG. 11 (A) is a perspective view in which the aluminum foil 24 is attached from the front and back sides of the member fitted in this way, and FIG. 11 (B) is a cross-sectional view thereof. Since the aluminum foil 24 is adhered to the aluminum frame 22, the sealing property is high.

FIG. 12 is a view in which the member to which the aluminum foil 24 is adhered and the filter member 21 is sealed, is fitted into the main body 1 of the smartphone case having the window 25 opened on the main surface 3. When fitting, it is necessary to firmly bond and fix it. This is because it should not wobble when aluminum foil 24 is peeled off later. Reference numeral 26 is a spacer member, which functions to prevent the main surface 3 from strongly hitting the filter member 21 when the main body 1 of the smartphone case is folded when the smartphone is not in use.

As described above, the filter layer or the filter member 21 of the air-take-in part 8 is sealed by using a sealing member made of a metal plate, a frame, or a foil. The same can be applied for the following examples.

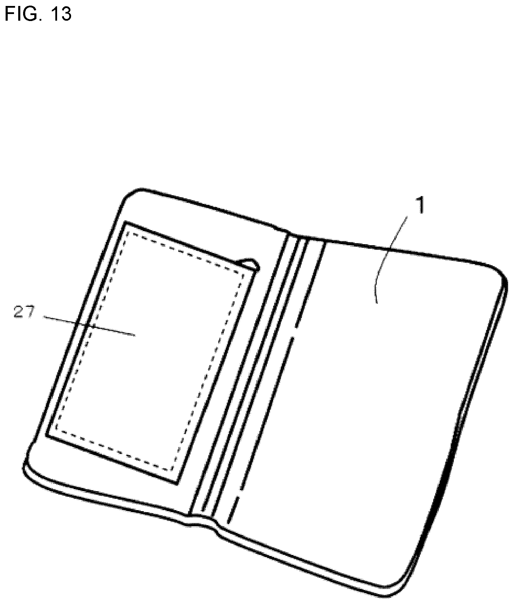

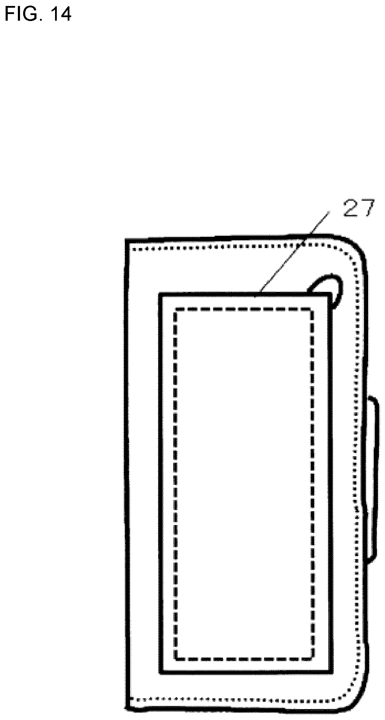

FIG. 13 is a perspective view of the inside to which the decorative sheet 27 is attached from upper, and FIG. 14 is a perspective view of the outside thereof.

### <Specific example 2>

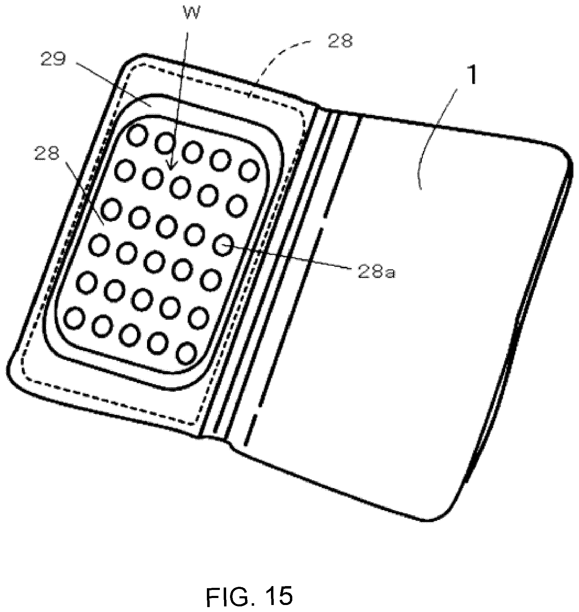

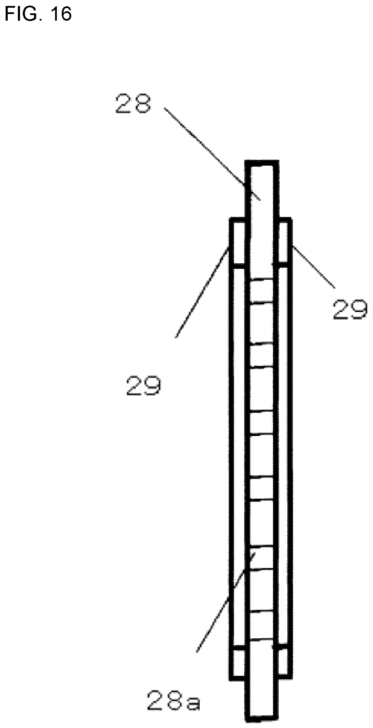

FIG. 15 shows an example in which is used a resin plate 28 as a straining member for a synthetic leather body of a conventional smartphone, and a porous 28a is opened in itself and used. As shown in FIGS. 15 and 16, windows W are opened on the front and back of the synthetic leather main body, and a porous 28a is formed in the resin plate 28 of the portion exposed to the window W, and an aluminum frame 29 is attached to both the front and back sides so as to surround the perforated 29a of the resin plate 28.

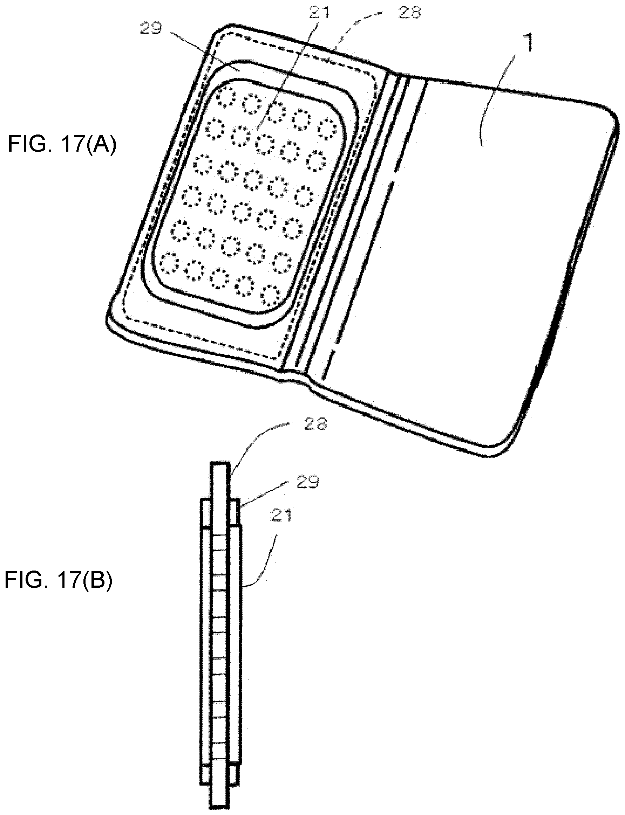

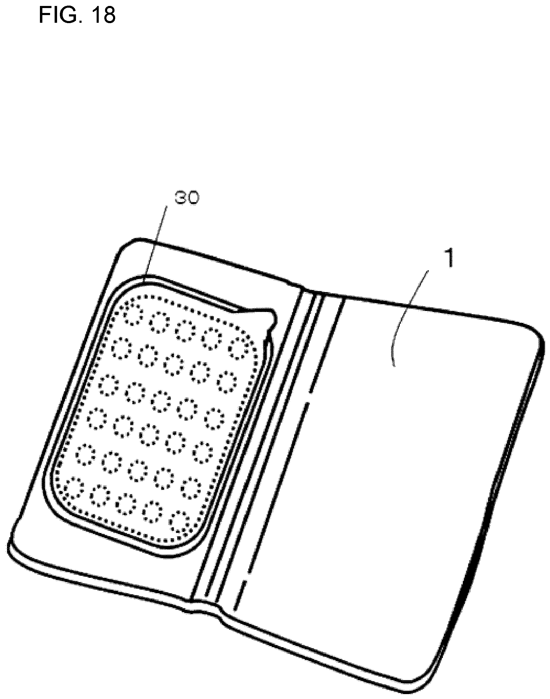

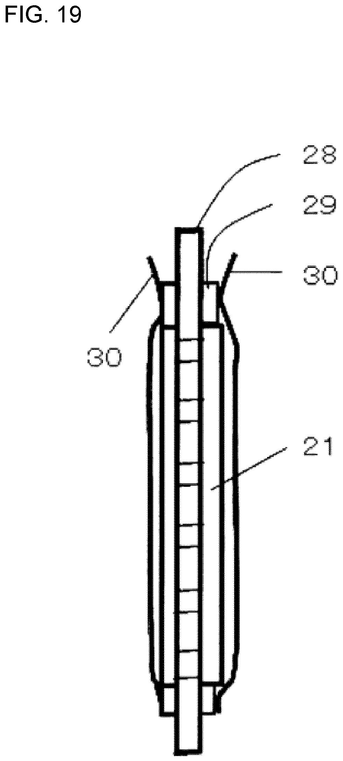

Further, as shown in the perspective view of FIG. 17(A) and the cross-sectional view of FIG. 17(B), the filter member 21 is fitted only into the inner aluminum frame 29. As shown in the perspective view of FIG. 18 and the cross-sectional view of FIG. 19, the front and back surfaces thereof are covered with the aluminum foil 30. As a result, the adhesion (mistyped-- sealing is correct) of the filter member 21 can be ensured.

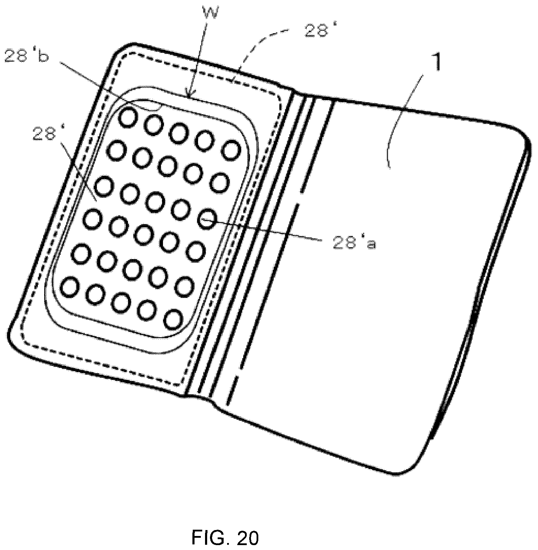

FIG. 20 is a modification of Specific Example 2. In this example, an aluminum plate 28' is used as a straining member for the synthetic leather body. That is, as shown in FIG. 20, the perforated 28'a is formed in the aluminum plate 28'part itself exposed to the windows W opened on the front and back of the synthetic leather body, respectively.

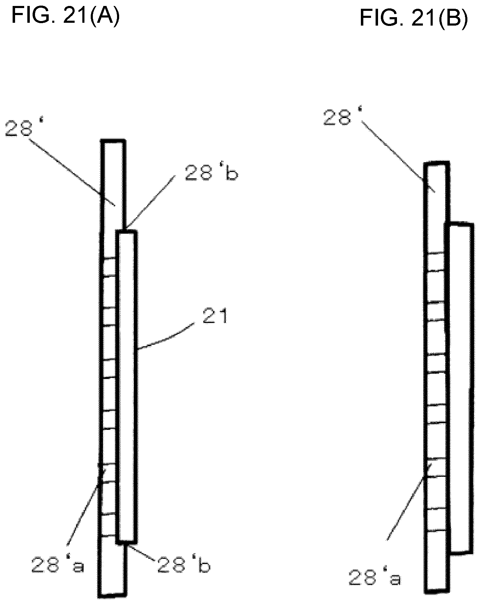

Next, as shown in FIG. 21 (A), a recess 28'b is formed inside the aluminum plate 28', and the filter member 21 is fitted into the recess 28'b.

Alternatively, as shown in FIG. 21(B), the filter member 21 may be attached as it is to the inside of the aluminum plate 28' without forming the recess 28'b.

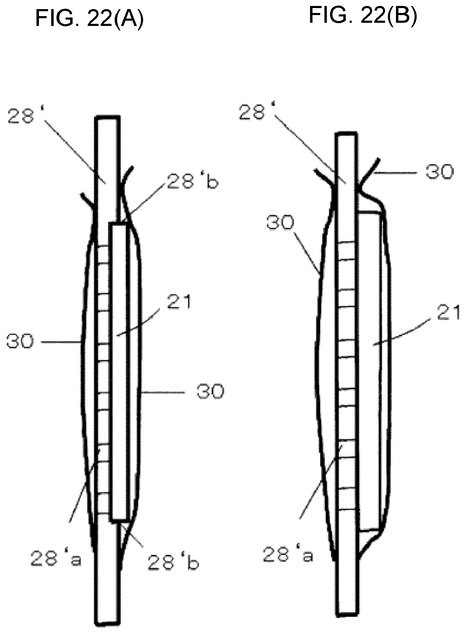

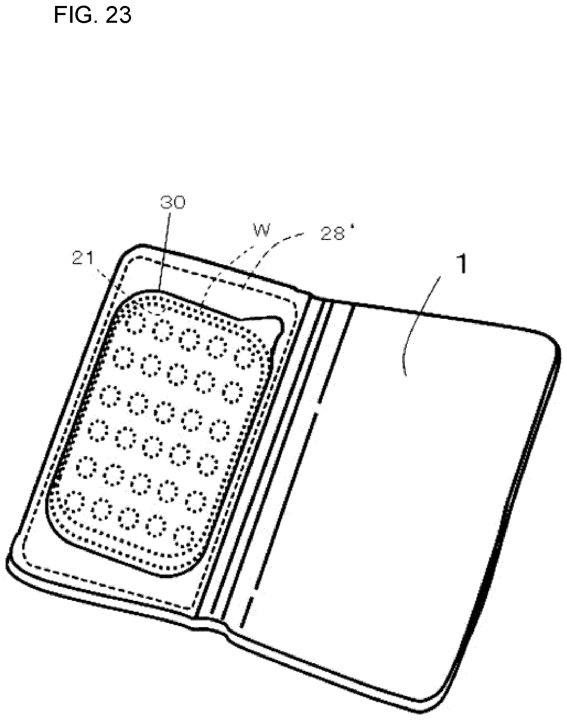

Next, as shown in FIGS. 22(A) and 22(B), the aluminum foil 30 is attached from the front and back sides. Since the metals are bonded to each other, the sealing performance is high. FIG. 23 is an inside perspective view showing the state. Since the aluminum frame 29 is not used in this modification, the cost is reduced.

On the other hand, for the synthetic leather body, the outer circumferences of two sheet members are first sewn together, but the two adjacent sides are not closed, and the members of FIGS. 22 (A) and 22 (B) described above are inserted from that location, and the window Wand the aluminum foil 30 are aligned and then bonded. For example, a silicon tape with an adhesive is attached in advance around the inner edge of the leather window W, and the silicon tape is peeled off and attached.

Finally, the two adjacent sides of the leather are sewn closed.

### <Specific example 3>

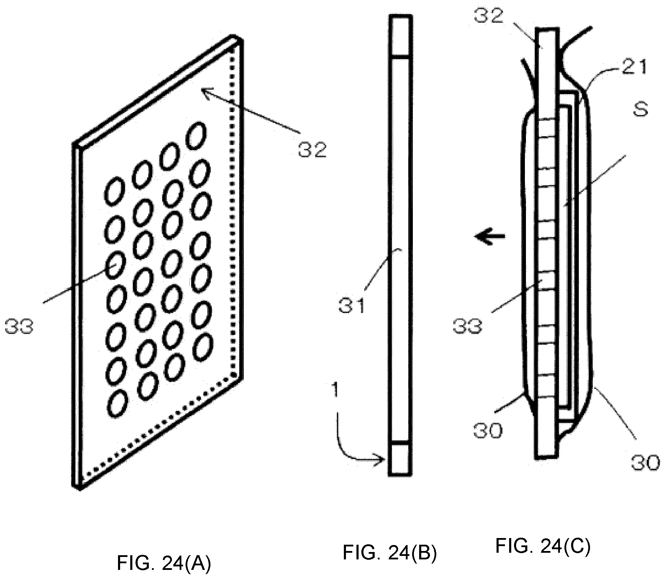

As shown in FIG. 24 (B), a window 31 is opened in the straining resin plate of the main body 1 of the smartphone case. On the other hand, as shown in FIG. 24 (A), an aluminum plate 32 having a porous 33 is prepared. Then, as shown in FIG. 24(C), the filter member 21 is attached to one side of the aluminum plate 32 so as to cover the porous 33. At that time, a gap S is provided so as not to reduce the filtering function. From upper, both the front side and the back side are covered with aluminum foil 30.

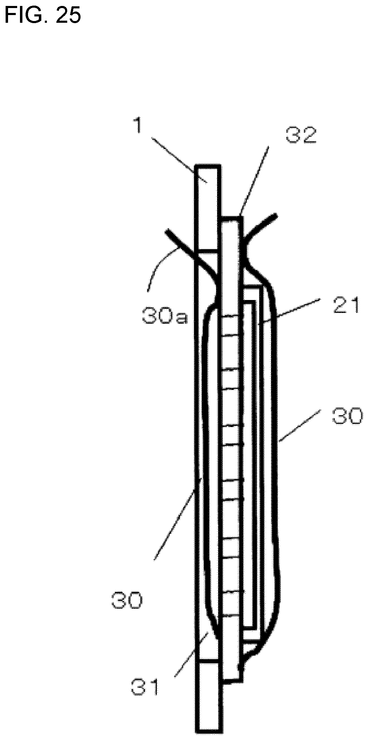

After that, as shown in FIG. 25, the member covered with the aluminum foil 30 is attached to the inner edge portion of the window 31 so as to cover from the inside the window 31 provided in the main body 1 of the smartphone case. The outer tongue piece 30a that comes to the outside is assembled by passing through the window 31 of the resin plate. It is necessary to strengthen the adhesion of the aluminum plate 32 to the resin plate so that it will not come off. Although it is attached to the inner edge of the window 31, it can be fitted into the window 31 instead.

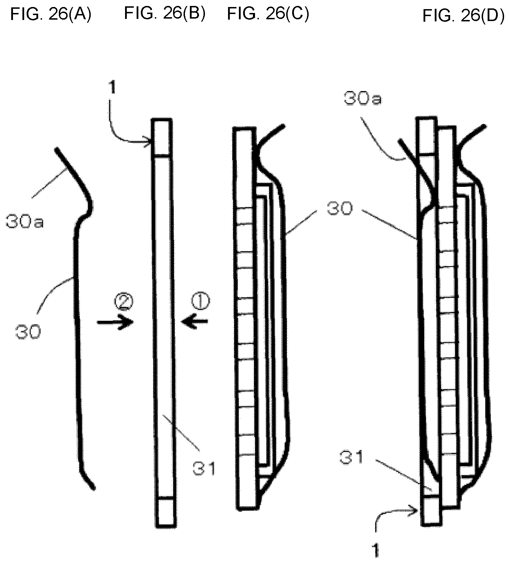

In addition, in FIG. 24 (C), the aluminum foil 30 was attached by covering both the front side and the back side, but as a modification, as shown in FIG. 26 (C), the front side was not attached and the aluminum foil 30 was attached only to the inside, and paste it on the inner edge of the window 31 of the main body 1 of the smartphone case shown in FIG. 26 (B), and then, the front side aluminum foil 30 shown in FIG. 26 (A) may be attached from the front side. FIG. 26 (D) is a finished product.

### <Specific example 4>

As shown in FIG. 27 (A), an aluminum plate 40 is used as a straining member for the main body 1 of the smartphone case. Porous 41 is formed there, and further, a filter member 21 is packed in each of the porous 41. As shown in FIG. 27 (B), the aluminum foils 30 and 30 are attached from the front side and the back side.

It is desirable that the size of the porous 41 is as large as possible in order to exert the filter function.

As a further modification, it is desirable to attach an oxygen generator. In that case, it is desirable to arrange it inside the aluminum foil 30. By doing so, deterioration over time can be prevented. Furthermore, it is desirable that the attaching position is as close as possible to a mouth during use. This is because the dampness of the breath exhaled by a person during use, can also be used to generate oxygen. The oxygen generator may be provided not only on the inside of the aluminum foil 30, but also on the outside of the aluminum foil 30, for example, inside the surrounding member 2.

When the oxygen generator is used, it is generated by sprinkling water or tea as appropriate, depending on the material. If you can't find the appropriate water or tea, you can spit on it.

By attaching such an oxygen generator to a predetermined place in the smartphone case, it becomes possible to assist breathing for as long as possible in combination with the function of the filter member 21. It should be noted that the attachment of this oxygen generator is applicable to all the embodiments of the present invention.

Figs. 28 (A) and 28 (B) are modified examples of the example of FIG. 27. In this example, the aluminum foil 30 on the outer side does not exist, and instead, a shallow-bottomed box 42 made of an aluminum material covers an aluminum plate 40 and sealed. Therefore, a portion of the filter member 21 communicates with the hollow portion P of the box 42. Further, an inhalation pipe 44 is attached to the lower portion 43 of the box 42 in a communicating state, and communicates with the hollow portion P thereof. That is, as shown in the FIG.(B), a lead-in hole 45 is formed in the lower portion of the aluminum plate 40, communicates with the hollow portion P, and the inhalation pipe 44 is connected to the lead-in hole 45. In this example, a lead-in hole 45 is provided inside the surrounding member 2.

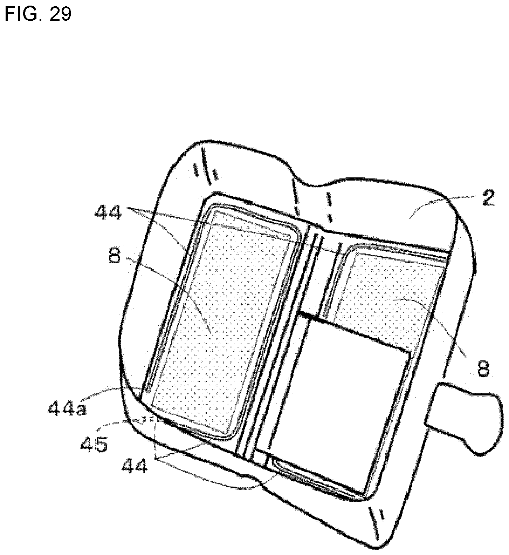

Therefore, at the time of use, the box 42 is used as it is without being peeled off, and the lower end 44a (see FIG. 29) of the inhalation pipe 44 is hung downward for use as shown in FIG. 28. At that time, the inhalation pipe 44 is hung downward beyond a low bulk portion of the surrounding member 2. Since the surrounding member 2 can be pressed against the face by hand, there is no need to worry about forming a gap. Further, as described below, it is also desirable to insert the lower end 44a of the inhalation pipe 44 into the inside of clothes such as underwear and outerwear. Here, the hollow portion P takes in external air only through the inhalation pipe 44.

Normally, as shown in FIG. 29, the inhalation pipe 44 is stored under the surrounding member 2 in a state of being pulled into the inside of the surrounding member 2 and further wound. That is, the inhalation pipe 44 drawn in from the pull-in hole 45 is housed under the surrounding member 2 with a folded state, in a wound state. Further, it is desirable that the position of the lead-in hole 45 is provided on the lower side. Further, although it is the position of the edge in the figure, it may be the position of the center. The hollow portion P is shielded from the outside air by the housing, and further a check-valve may be provided in the middle of the inhalation pipe 44.

Alternatively, as shown in FIG. 28(B), an aluminum check valve 46 is provided in the lead-in hole 45 of the lower portion 43 of the box 42. By these, it is usually sealed, and in the event of a fire, air can be sucked into the hollow portion P from the outside by breathing. In this case, it is essential to provide an exhaust silicon valve on a part of the surrounding member 2 or the main body 1. In another modification, the installation of the exhaust silicon valve is optional.

Further, when not in use, the tip 44a of the inhalation pipe 44 may be sealed from above. In the event of a fire, it can be peeled off by pulling the inhalation pipe 44.

The combination of the seal and the check valve 46 is also effective for extending the preservation period of the filter member 21 and the oxygen generator.

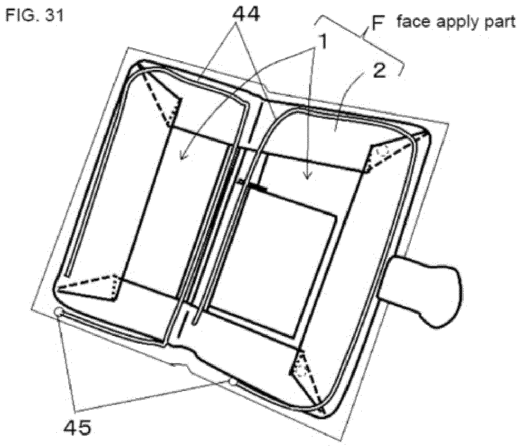

As shown in FIG. 30, the inhalation pipe 44 may be arranged outside the surrounding member 2. FIG. 31 is a perspective view of it wound and arranged on the upper side of the folded surrounding member 2. In this case, the inhalation pipe 44 is hung down when used, and there is an advantage that it is not necessary to get over the surrounding member 2.

In any of the examples of FIGS. 29 to 31, in the event of a fire, the surrounding member 2 is erected and at the same time, the two wound inhalation pipes 44 are pulled out while being unwound, and each tip 44a is pulled out, and insert it under your underwear or jacket from around your neck. By doing so, the underwear and outerwear first block the soot generated in the event of a fire, and the filter member 21 further filters the air from which the soot has been removed, which helps the filtering function of the filter member 21 such as a catalyst.

In these examples, since breathing is performed by two suction tubes 44, it is easy to breathe even if the diameter of one suction tube 44 is small.

Of course, it may be used by hanging it downward as it is without inserting it under underwear or outerwear. As a result, soot and the like are heated and move upward, so it is more likely that you can breathe cleaner air at lower position of the mouth than breathe air near the mouth.

In the case of the examples of FIGS. 28 to 31, in the event of a fire, it can be handled by such a simple step of (a) stand the surrounding member, (b) hung the suck pipe hung down, (c) peeling off the inner aluminum foil.

The attaching of the box 42 or the inhalation pipe 44 in the modified examples of FIGS. 28 to 31 can be appropriately applied not only to this examples but also to each of the above-described examples.

In the above-mentioned specific examples 1, 2, 3, 4, etc., in case of emergency, the smartphone 10 is removed, the surrounding member 2 is erected, and the aluminum foils on the front and back sides are peeled off, and the smoke-proof/gas mask is immediately completed. Therefore, it can be easily used even if you are in a panic. Further, since the filter member 21 is sealed with an aluminum material, its effectiveness can be maintained for a long period of time.

Further, the assembly order in the description in the above-mentioned specific examples 1, 2, 3, 4, etc. is not necessarily the manufacturing order when actually manufacturing the smartphone case of the present invention, and there is such a part that an orderly explanation is also included for intentionally explaining the structure to be understood easily. Therefore, the production order and the production method are not limited to the methods described here, and any method may be used.

As described above, the surrounding member of the present invention does not necessarily have to be provided on the outer periphery of the main body of the smartphone case. For example, it may be erected from the middle of the inner surface of the main body of the smartphone case. Alternatively, a part of the surrounding member, for example, the upper portion may be provided on the outer periphery, and the remaining lower portion may be erected from the middle of the inner surface of the main body of the smartphone case.

Further, the face-apply part of the present invention does not have to have a surrounding in the first place, and may be composed of a part of a wallet-type smartphone case. For example, the outer peripheral edge of the main body of the smartphone case itself may be flexible (has elasticity or plasticity) and may be deformed by hand to cover the nose and mouth in case of emergency.

Further, the air-take-in part 8 is not always essential. That is, by increasing the height of the surrounding member, the enclosed space can be increased, and in such a case, if the distance is short such as 10 m or 20 m, it may be possible to take refuge only with the air in the large space. This is because oxygen remains in the exhaled air. Anyway, it would be good if we could prevent carbon monoxide generated in the fire place from being inhaled.

Further, as described above, a part of the surrounding member of the present invention may be provided with an air-take-in part having a filter layer or a filter member capable of filtering smoke and toxic gas. Alternatively, an air-take-in part having a filter layer or a filter member may be provided on both the main body side and the surrounding member side of the smartphone case. The filter layer or the filter member may be, for example, a multi-layered adsorption layer and catalyst layer.

On the other hand in the event of a fire, the person who escapes from the place can peel off an aluminum bag which encloses and seals in advance the filtering material and can fit and paste it into the main body of the smartphone case having the surrounding member and the window as in the above embodiment. In such a case, it is necessary to be careful not to create a gap between the filter member and the main body of the smart case because of a panic.

Further, in the present invention, not only aluminum foil, aluminum plate, aluminum frame, etc., but also other metals may be used, and further, the sealing property is slightly weakened, but a resin member is used instead of them.

Further, the present invention is not limited to the type that opens left and right and folds, but may be a wallet-type smartphone case that opens up and down and folds. This is because it is enough that at a fire a straight part being bent should be aligned with the nose.

### UTILITY OF INDUSTRY

According to the wallet-type smartphone case of the present invention, it can be used as a smartphone case usually, and in the event of a fire, because it is close to us, it can be immediately used as a smoke-proof/poison-proof mask, so it is useful as a smoke-proof/poison-proof mask in the event of a fire.

### CODE EXPLANATION

- 1: body of smartphone case (face-apply part)
- 1': wallet-type smartphone case
- 2: surrounding member (face-apply part)
- 3: main surface of body of smartphone case
- 4: base piece
- 5: connecting piece
- 6, 7: hook-and-loop fastener
- 8: air-take-in part
- 8a: protective outer layer
- 8b: filter layer
- 10: smartphone
- F: face-apply part

## Claims

1. A wallet-type smartphone case comprising a body having such casing function for a smartphone, which can be folded right and left or up and down, wherein
a face-apply part is constituted by at least a nearly entire of the body,
by pressing the body of the wallet-type smartphone case against a face with it open, the face-apply part can cover at least nose and mouth of the face, thereby to have such function of a smoke proof mask or gas mask.

2. The wallet-type smartphone case according to claim 1, wherein
the face-apply part has a surrounding member,
at least a part of the surrounding member is attached to the body,
the surrounding member can select a standing state and a lying down state, and
the surrounding member takes the lying down state when used as a smartphone case, and takes the standing state when used as the smoke proof mask or gas mask.

3. The wallet-type smartphone case according to claim 2, wherein the surrounding member is folded inside of the body at the lying down state.

4. The wallet-type smartphone case according to claim 2, wherein there is provided an air-take-in part on a part of the body or a part of the surrounding member.

5. the wallet-type smartphone case according to claim 4, wherein
an Inhalation pipe is attached to the air-take-in part with communicating, and
when using, outside air is took in only through the inhalation pipe.

6. the wallet-type smartphone case according to claim 4, wherein the air-take-in part has a filter layer or filter member which can filter smoke or poisonous gas.

7. the wallet-type smartphone case according to claim 6, wherein the filter layer or filter member of the air-take-in part is sealed by using a sealing member which is composed of metal plate or metal frame or metal foil.

8. the wallet-type smartphone case according to claim 7, wherein there is provided oxygen generator in the sealing member.
